# EUROPEAN PATENT APPLICATION

(11) **EP 3 015 305 A1**
(43) Date of publication of application: **04.05.2016**
(21) Application number: 14816789.3
(22) Date of filing: 19.06.2014
(51) Int. Cl.: B60K 35/00, G02B 27/01

(54) **HEAD-UP DISPLAY DEVICE**

(30) Priority: 25.06.2013 JP 2013132485; 23.12.2013 JP 2013264746
(71) Applicant: Nippon Seiki Co., Ltd., Nagaoka-shi, Niigata 940-8580 (JP)
(72) Inventor: OGASAWARA,Yukio, Niigata (JP); TAKADA,Hidehisa, Niigata (JP)
(74) Representative: Carpmaels & Ransford LLP
(86) International application number: PCT/JP2014/066258
(87) International publication number: WO 2014/208440

(57) **Abstract**

A combiner-type head-up display device for which a lid body opening/closing mechanism can be simplified is provided. This liead-up display device (1), said device having a combiner (30) for reflecting display light emitted from an indicator (10) toward the driver side in order to cause the driver to visually recognize the display light in the form of a virtual image, is equipped with: a holder (31) which, with the combiner (30) being attached thereto, moves in the vertical direction from a stored position to a display position (B) through an aperture; pins (32a) which are provided on side surfaces of the holder (31); a support body (33) which has vertical guide grooves (34) for guiding the pins (32a); a vertical drive mechanism (40) for driving the holder (31) in the vertical direction; and a lid body (50) which has driven arms (52), which swing by being pushed by the pins (32a) as the pins move vertically as the holder (31) is vertically driven, and opens/closes the aperture. In addition, angle adjustment grooves (34a), which enable pins (32b) to rotate about pins (32a) with pins (32a) abutted on one end of the guide grooves (34), are provided.

## Description

### TECHNICAL FIELD

The present invention relates to a combiner-type head-up display device.

### BACKGROUND ART

A head-up display device is a device which displays information or the like required for driving, for example, to a driver of a vehicle, so as to overlap with a scenery in a forward direction of the vehicle; and is capable of keeping track of the required information without carrying out significant movement of the line of sight while in driving.

For example, a head-up display device disclosed in Patent Literature 1 is a head-up display device which has at least: a transparent light guiding member; a combiner which is provided at the transparent light guiding member; and light emitting display means for emitting light inclusive of information as a display image, the head-up display device enabling the light from the light emitting display means to be guided to the combiner by way of the transparent light guiding member, in which the transparent light guiding member is movable, the combiner appears on a dashboard when a display image is displayed, and the combiner can be stored in the dashboard while the image is not displayed. The combiner is not provided at a front glass and thus the combiner is inconspicuous and does not become an eyesore from the inside and outside of a vehicle when the information is not displayed, and durability of the combiner itself is improved as well.

Such a combiner is stored in the dashboard and thus an opening portion of the dashboard is required, there is an apprehension that trash or dust, moisture or the like enters the opening portion, and a covering body which closes the opening portion is required.

A head-up display device provided with a covering body which opens or closes an opening portion of a dashboard is disclosed in Patent Literature 2; inside of the dashboard, a display source and a magnification reflection mirror are fixed; an opening portion is formed in an upper face of the dashboard in order to emit image light of an overlapping image light-emitted and displayed by the display source and reflected by the magnification reflection mirror and then advancing towards a front glass in front of the line of sight of a driver,; and a lid body which opens or closes this opening portion is provided.

This lid body, in an uncovered state in which the opening portion is opened, is erected from a circumferential edge part which is close to an eye point of the opening portion and then interrupts the line of sight turning from the eye point into the dashboard over the opening portion, whereas, in a covered state in which the lid body closes the opening portion, a shielding member which retracts from the line of sight while being inclined so as to extend along a top face of the dashboard is provided so as to thereby prevent the inside of the dashboard from getting into the line of sight of the driver from the opening portion, and prevent the dashboard itself from becoming an eyesore.

### CITATION LIST

### PATENT LITERATURE

Patent Literature 1: Japanese Unexamined Patent Application Publication No. 8-113059
Patent Literature 2: Japanese Unexamined Patent Application Publication No. 2002-331855

### SUMMARY OF THE INVENTION

### PROBLEMS TO BE SOLVED BY THE INVENTION

However, in the case of the head-up display device in which the combiner described in Patent Literature 1 is moved between a storage position of the dashboard and a display position on the dashboard, if an attempt is made to apply the lid body described in Patent Literature 2 in order to open or close the opening portion of the dashboard for combiner, the lid body is divided into two sections, and at each of the covering halves that are divided into two sections, an opening or closing link mechanism is provided; and in a case where the combiner is vertically moved, a link mechanism which opens and closes the lid body and a movement mechanism which vertically moves the combiner are required to be moved together, and there is a problem that the structure becomes complicated, which leads to an increase in size, and the property of assembling into the dashboard is impaired, etc.

Also, in the head-up display device that moves the combiner described in Patent Literature 1 and Patent Literature 2 from the storage position of the dashboard to the display position on the dashboard, an additional mechanism is required to adjust a display angle of the combiner after the combiner has been extended; and therefore, there is a problem that the structure becomes complicated, the head-up display device is increased in size, and the property of assembling into the dashboard is thereby impaired, etc.

The present invention has been made in view of the circumstance described above, and it is an object of the present invention to provide a combiner-type head-up display device which is capable of simplifying an opening or closing mechanism of a lid body.

### MEANS FOR SOLVING THE PROBLEM

In order to achieve the object described above, a head-up display device according to the present invention is characterized by a head-up display device comprising a combiner which directs and reflects, to a driver side, display light of information to be displayed, the display light being emitted from a display, the head-up display device causing visual recognition due to a virtual image to be achieved in a forward direction of a driver, the head-up display device comprising:
a holder on which the combiner is mounted, and which vertically moves from a storage position to a display position via an opening portion;
a pin which is provided on a side face of the holder;
a supporting member having a guiding groove in a vertical direction in which the pin is to be guided;
vertical driving means for vertically driving the holder; and
a lid body having a driven arm which turns while being pressed by the pin that vertically moves concurrently with vertical driving of the holder, the lid body opening or closing the opening portion.

In addition, a head-up display device according to the present invention is characterized by a head-up display device comprising a combiner which directs and reflects, to a driver side, display light of information to be displayed, the display light being emitted from a display, the head-up display device causing visual recognition due to a virtual image to be achieved in a forward direction of a driver, the head-up display device comprising:
a holder on which the combiner is mounted, and which vertically moves from a storage position to a display position via an opening portion;
vertical driving means for elevating the holder;
an upper pin and a lower pin which are respectively provided at upper and lower sides of a side face of the holder; and
a supporting member having a guiding groove which guides the upper pin and the lower pin,
wherein the guiding groove comprises an angle adjustment part in which, in a state in which either one of the upper pin and the lower pin has abutted against an end part of the guiding groove, another pin is turnable on an arc of a circle in which a distance between such one pin and such another pin is defined as a radius about such one pin, and
concurrently with elevation of the combiner by the vertical driving means, an angle of the combiner is made adjustable about such one pin by way of the angle adjustment part.

### EFFECT OF THE INVENTION

According to the present invention, it is possible to simplify an opening or closing mechanism of a covering mechanism.

### BRIEF DESCRIPTION OF THE DRAWINGS

[Fig. 1] Fig. 1 is a schematic perspective view at a display position according to a first embodiment of a head-up display device of the present invention.
[Fig. 2] Fig. 2 is a schematic perspective view of a part according to the first embodiment of the present invention.
[Fig. 3] Fig. 3 is a schematic side view at a storage position according to the first embodiment of the present invention.
[Fig. 4] Fig. 4 is a schematic side view of a state in which the device has been mounted on a vehicle according to the first embodiment of the present invention.
[Fig. 5] Fig. 5 is a side view for explaining adjustment of a display angle of a combiner according to a second embodiment of the present invention, wherein Fig. 5 (a) is a view according to elevation in storage/extension, and
Fig. 5 (b) is a view according to adjustment of the display angle of the combiner.
[Fig. 6] Fig. 6 is an enlarged side view of an upper end part of a guiding groove for the sake of adjustment of the display angle of the combiner according to the second embodiment of the present invention.
[Fig. 7] Fig. 7 shows modification examples of a groove shape at the upper end part of the guiding groove for the sake of adjustment of the display angle of the combiner according to the second embodiment of the present invention, wherein Fig. 7 (a) shows Modification Example 1, and Fig. 7 (b) shows Modification Example 2.

### MODE FOR CARRYING OUT THE INVENTION

### (First Embodiment)

Hereinafter, a head-up display device according to a first embodiment of the present invention will be described with reference to the accompanying drawings.

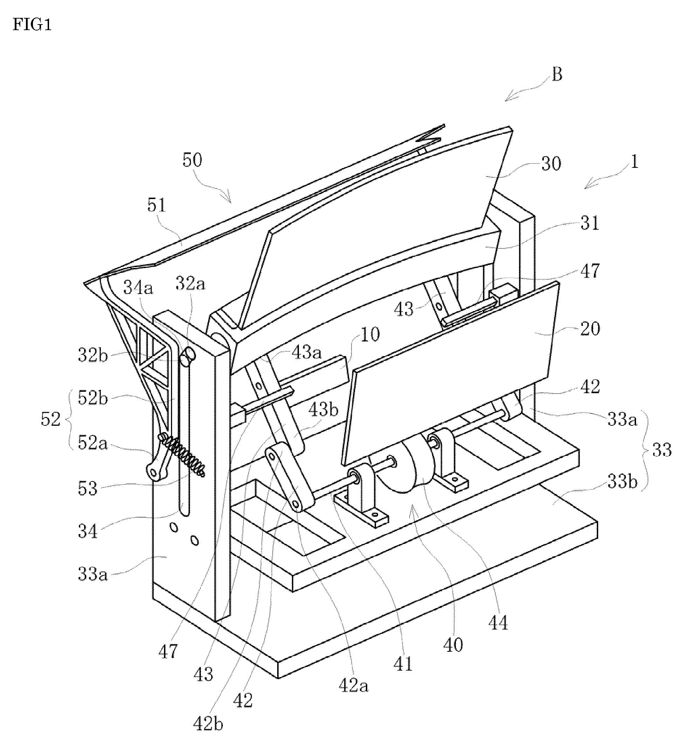

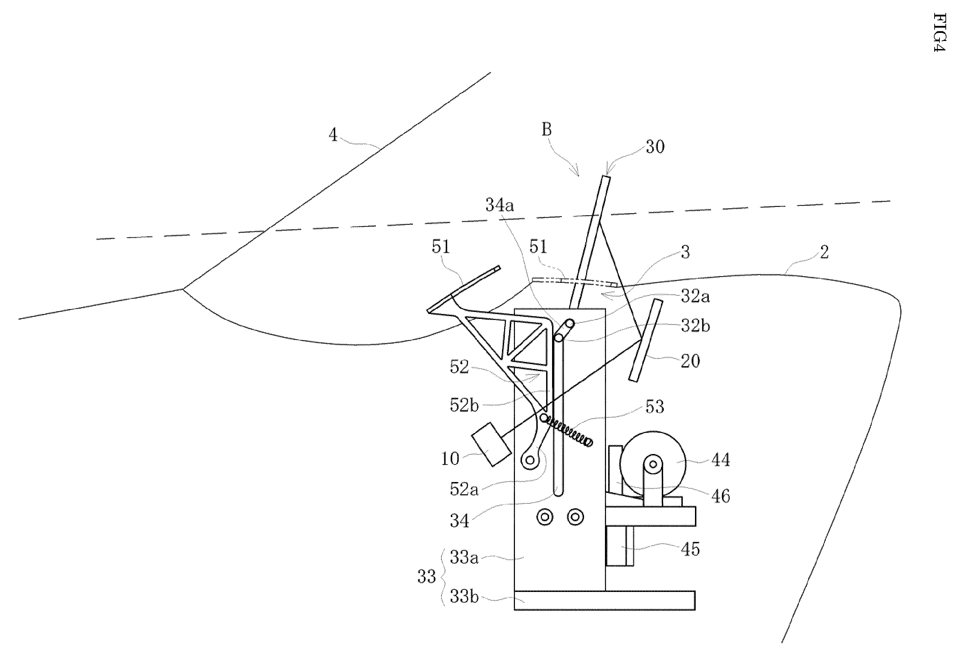

A head-up display device 1 according to the embodiment, for example, as shown in Fig. 1 and Fig. 4, is composed of an indicator 10; a planar mirror 20; and a combiner 30 which is a reflection member, and in a case where the device is mounted on a vehicle, display light related to various items of information, which is emitted from the indicator 10, is radiated toward the combiner 30 via the planar mirror 20; and the display light that is reflected by the combiner 30 is visually recognized at an observation position of a driver so that the various items of information are recognized as a virtual image with background in front of the combiner 30.

In this head-up display device 1, in a case where the various items of information of the vehicle are displayed, the combiner 30 that is stored in a storage position A in the dashboard is risen so as to be set to a display position B on the dashboard, and in a case where there is no need to display such information, the combiner 30 is lowered and stored to thereby prevent the combiner itself from being an eyesore to the driver.

The indicator 10 is composed of: a 3.1-inch color TFT (Thin Film Transistor) liquid crystal display (LCD: Liquid Crystal Display), for example, and radiates the display light related to the various items of information of the vehicle, to the combiner 30 that is a reflection member. It is to be noted that a display of another configuration such as a laser projector or a CRT (Cathode Ray Tube) can also be employed without being limited to the case in which the display is composed of the liquid crystal display.

The combiner 30 is composed of a concave mirror made of polycarbonate (PC: Polycarbonate), for example; the display light that is emitted from the indicator 10 is reflected to the driver side; and the driver can see the background concurrently by way of external light having transmitted the combiner 30 at the same time when a virtual image is displayed to be distally extended through the combiner 30.

In such a head-up display device 1, the combiner 30 is vertically moved via an opening portion 3 between the storage position A in the dashboard 2 and the display position B on the dashboard 2 and thus the combiner 30 is supported on the holder 31, and by way of the holder 31 that is longitudinally divided into two sections, a lower end part of the combiner 30 is fixed while being sandwiched therebetween. At both sides of this holder 31, two pins 32a, 32b are vertically disposed, and are mounted so as to protrude to the outside.

At both sides of the holder 31, a pair of guide plates 33a which constitute a supporting member 33 are disposed, a lower end part of each of the guide plates 33a is fixed to a horizontal supporting plate 33b, and a supporting member 33 is constituted. On the pair of guide plates 33a which oppose to each other, guiding grooves 34 are formed along a vertical direction, and to the respective guiding grooves 34, two pins 32a, 32b are mounted so as to penetrate and protrude to the outside, an elevating movement can be carried out along the guiding grooves 34, and the combiner 30 that is supported on the holder 31 can be thereby vertically moved. It is to be noted that the two pins 32a, 32b are made of a metal such as stainless, for example.

The guiding grooves 34, each of which guides elevation of this combiner 30 and restrains the posture, are formed in a linear shape along a vertical direction between a lower end position and an upper end position; and however, here, at an upper end part of the guiding groove 34, an angle adjustment part 34a which adjusts an angle is formed so as to communicate with the guiding groove 34 while being inclined to a front side of the vehicle (the front glass 4 side).

The angle of the combiner 30 is adjusted, and the posture can be restrained according to the positions in the guiding grooves 34 of the two pins 32a, 32b of the holder 31.

The upper pin 32a is positioned at an immediately upper side in the guiding groove 34 with respect to the lower pin 32b, whereby it is possible to set the combiner 30 in a vertical state, and the upper pin 32a is positioned in the angle adjustment part 34a so as to be displaced from the immediately upper side with respect to the lower pin 32b, whereby it is possible to establish a tilt state in which the combiner 30 has been inclined, and it is possible to restrain the posture of the combiner 30 by way of the guiding grooves 34 of the two pins 32a, 32b as well.

This supporting member 33 is made of a synthetic resin such as a polybutylene terephthalate resin (PBT: Polybutylene Terephthalate), for example.

Incidentally, it is also possible to dispose only one pin in the guiding groove 34 and then restrain the posture of the combiner 30 by way of another mechanism, and in a case where there is no need for adjustment of an angle, a slider having a parallel part in a vertical direction is employed in place of the two pins, and guiding in the vertical direction and restraining of the posture can also be thereby made compatible with each other.

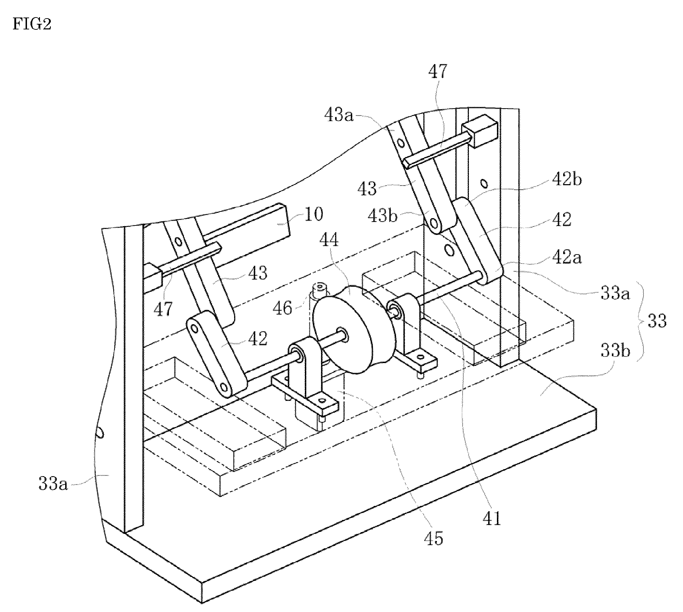

In a vertical drive mechanism (vertical driving means) 40 which vertically drives this combiner 30, for example, as shown in Fig. 1 and Fig. 2, one end part 42a of a first arm 42 is mounted to a rotary shaft 41 which is provided on the supporting plate 33b; the other end part 42b of the first arm 42 and the other end part 43b of a second arm 43 are coupled to each other by way of a pin; and one end part 43a of the second arm 43 is coupled to the holder 31 by way of a pin. A so called crank mechanism is composed of the first arm 42 and the second arm 43 that are respectively mounted to these rotary shafts 41; and the guiding grooves 34, and the first arm (equivalent to a crank) 42 is rotated via the rotary shaft 1, and one end part 43a of the second arm 43 can be thereby reciprocally moved along the guiding groove 34.

A gear 44 is mounted to this rotary shaft 41, and engages with a worm 46 which is driven by a direct current motor 45, and the direct current motor 45 is rotatably operated on the basis of an operational signal from control means (not shown). Here, by way of a forward rotation and a backward rotation of the direct current motor 45, the holder 31 is vertically driven so as to be elevated along the guiding groove 34. In this manner, via the opening portion 3 of the dashboard 2, the combiner 30 can be vertically moved between the storage position A in the dashboard 2 and the display position B on the dashboard 2.

It is to be noted that reference numeral 47 in the figure designates a stopper, and the stopper is abutted against the second arm 43 so as to smoothly carry out switching from the forward rotation to the backward rotation, that is, from rising to lowering, and the lowering is thereby carried out in the same passageway as that in the case of rising.

At the storage position A in the dashboard 2 of such combiner 30, the opening portion 3 of the dashboard 2 is left open and thus a lid body 50 is provided so as to open or close concurrently with elevation of the holder 31.

The lid body 50 is composed of: a covering part 51 of which size is capable of closing the opening portion 3 correspondingly to the size of the opening portion 3 of the dashboard 2; and a driven arm 52 which is turned while faithfully following two pairs of pins 32a, 32b that are provided at both end parts of this covering part 51, and that are provided at both sides of the holder 31, whereas the lid body is made of a synthetic resin such as an ABS resin (Acrylonitrile Butadiene Styrene Copolymer), for example.

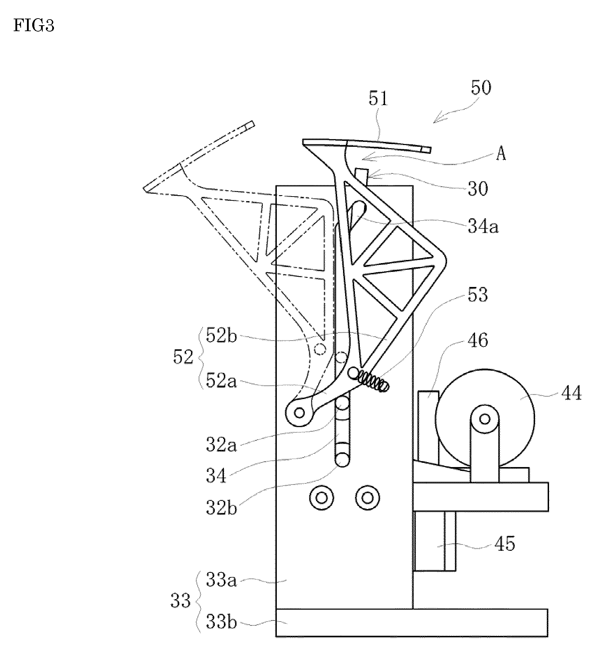

The driven arm 52 is composed of an opening or closing arm part 52a of which a lower end part is rotatably mounted to the guide plate 33a; and an opening maintaining arm part 52b which is continuous to the opening or closing arm part 52a. The opening or closing arm part 52a, as the state in which the covering part 51 has been closed is indicated by the solid line in Fig. 3, is disposed so that, in a state in which the two pins 32a, 32b of the holder 31 each have been positioned at a lower end of the guiding groove 34, a surface of the upper pin 32a and a bottom face of the opening or closing arm part 52 come into contact with each other, and the covering part 51 thereby closes the opening portion 3.

Also, in a case where an upper end of the combiner 30 that is supported on the holder 31 has risen up to a position immediately before reaching the opening portion 3, as indicated by the phantom line in Fig. 3, a turning center of the opening or closing arm part 52a and a length of the arm are set so as to be able to establish an open state in which the covering part 51 has retracted from the opening portion 3 by way of contact between the upper pin 32a of the holder 31 and a lower face of the opening or closing arm part 52a.

Therefore, opening or closing of the covering part 51 is carried out in a range in which the opening or closing arm part 52a turns between the state indicated by the solid line and the state indicated by the phantom line in Fig. 3.

The opening maintaining arm part 52b that is continuous to the upper end of this opening or closing arm 52a, as shown in Fig. 3, is provided so as to extend to be substantially perpendicularly upward from the opening or closing arm part 52a at the turned position in the open state of the covering part 51 that is retracted from the opening portion 3.

In this manner, while the upper pin 32a of the holder 31 rises coming into contact with a substantially perpendicular surface of the opening maintaining arm part 52b, the open state of the covering part 51 is kept to be maintained while an angle of the opening or closing arm part 52a is not varied, thus preventing the lid body 50 from coming into contact with anything when the combiner 30 rises or lowers.

This mechanism to open or close the lid body 50 concurrently with elevation of the combiner 30 is a mechanism to turn the driven arm 52 so as to be pushed up while the two upper and lower pins 32a, 32b moving concurrently with elevation of the combiner 30 are employed as driving sources; biasing means for biasing the driven arm 52 towards the two pins 32a, 32b side, that is, towards the side at which the covering body 50 has been closed, is provided in order to reliably transmit movement of the two pins 32a, 32b to the driven arm 52, and for example, a tension coil spring 53 is mounted between the opening or closing arm part 52 and the guide plate 32a of the supporting member 33.

It is to be noted that this biasing means is not limited to the tension coil spring 53, and a spiral spring is mounted about a turning center of the driven arm 52 so as to ensure biasing, or alternatively, another biasing means may be constituted.

In the head-up display device 1 that is constituted as described above, opening or closing of the lid body 50 and rising of the combiner 30 at the storage position A to the display position B are carried out as follows.

In the storage state in which the lid body 50 has been closed, as shown in Fig. 3, the combiner 30 lowers, and each of the upper and lower pins 32a, 32b of the holder 31 is positioned at a lower end part of the guiding groove 34. In this state, the tension coil spring 53 is pulled, whereby the opening or closing arm part 52a of the driven arm 52 of the lid body 50 is pushed against, and comes into contact with, the upper pin 32a, and the lid body 50 is established in its closed state.

In a case where various items of information of the vehicle are displayed on the head-up display device 1 from this state, an operation instruction is supplied from control means, which is not shown, to the direct current motor 45.

Afterwards, the direct current motor 45 is rotated; the gear 44 is rotated via the worm 46 and the rotary shaft 41 rotates; the holder 31 rises along the guiding groove 34 via the first arm 42 and the second arm 43; and the two pins 32a, 32b are also risen, and rising of the combiner 30 that is mounted to the holder 31 is thereby started.

The rising of the combiner 30 is started, whereby the upper pin 32a turns the opening or closing arm part 52a of the driven arm 52 so as to be pushed up against the tension coil spring 53, the covering part 51 is opened, and the combiner 30 is established in its complete open state so as not to interfere with the covering part 51 (refer to the state indicated by the phantom line in Fig. 3).

Further, if the combiner 30 is risen, the upper and lower pins 32a, 32b rises inside of the guiding groove 34; and however, at this juncture, these two pins merely rise along the opening maintaining arm part 52b of the driven arm 52, and the open state of the covering part 51 is maintained as it is.

After the combiner 30 has been thus risen, when the upper pin 32a gets into the angle adjustment part 34a upward of the guiding groove 34, the combiner 30 is inclined according to an angle of the angle adjustment part 34a, and the lower pin 32b that is positioned in the guiding groove 34 comes into contact with the opening maintaining arm part 52b, whereby the open state is maintained without returning of the covering part 51, and the combiner 30 is retained at a predetermined angle which is defined by the angle adjustment part 34a at the display position B.

On the other hand, in a case where the combiner 30 is stored from the display position B, an operation is made in accordance with the steps reversed from those in the case of rising; the covering part 51 is maintained in a state in which the covering part has been opened by the opening maintaining arm 52b until the upper end of the combiner 30 has lowered from the opening portion 3; and if the upper end lowers until a state in which interference with the covering part 51 does not arise has been established, the upper pin 32a is positioned at the opening or closing arm part 52a, and the upper pin 32a lowers concurrently with lowering of the combiner 30, and the covering part 51 is thereby closed.

The covering part 51 is opened so as to push up the opening or closing arm part 52a of the lid body 50 by utilizing an operation of the two pins 32a, 32b vertically moving the inside of the guiding groove 34 by way of the vertical drive mechanism 40 of the holder 31 on which the combiner 30 is thus supported; and the covering part 51 is closed so as to press the opening or closing arm part 52a by the operation of the two pins 32a, 32b, whereby there is no need to provide an exclusive opening or closing mechanism at the lid body, and the structure can be simplified and made compact. In this manner, the property of assembling into the dashboard 2 can be improved.

Also, in the direction in which the lid body 50 is to be closed, the lid body is biased by the tension coil spring 53 that constitutes biasing means, and the lid body 50 can be thereby retained in a stable state, irrespective of whether the lid body 50 is in its opened or closed state,

Incidentally, although in the head-up display device 1 of the embodiment, elevation driving of the combiner 30 was configured with the vertical drive mechanism that employs the direct current motor 45, the gear 44, and the worm 46, another vertical drive mechanism, for example, a mechanism configured with a spur gear pinion or a gear can also be employed without being limited thereto.

Also, although the foregoing embodiment described a head-up display device mounted to a vehicle by way of example, this head-up display device can be employed by mounting the device to on another vehicle such as a ship or an aircraft without being limited thereto.

### (Second Embodiment)

Next, a head-up display device according to a second embodiment of the present invention will be described with reference to the accompanying drawings.

A head-up display device 1 according to the embodiment is a device which causes a guiding groove 34 of the first embodiment to have a characterizing feature.

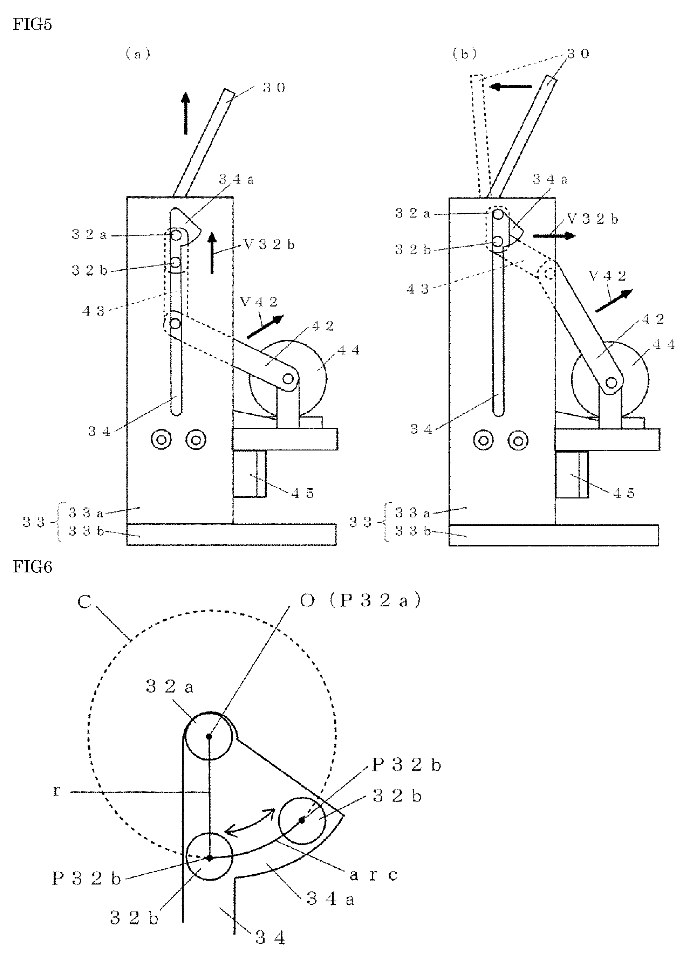

The guiding groove 34, as shown in Fig. 5, is formed in a linear shape along a vertical direction between a lower end position and an upper end position; forms, as a groove formed in the shape of a fan, an angle adjustment part 34a for adjusting a display angle of a combiner 30 at an upper end part of the guiding groove 34; and is capable of restraining a posture by adjusting the position in the height direction of the combiner 30 and the display angle.

In adjustment of the position in the height direction of the combiner 30, specifically, in a case where the combiner 30 is risen from the storage position A to the display position B, as shown in Fig. 5 (a), a direction V42 of a force which is applied to a first arm 42 due to rotation of a direct current motor 45 is restrained to a direction V32 of a force which is applied to a lower pin 32b in a guiding groove 34, from a state in which a lower pin 32b of a holder 31 is positioned at a lower end of the guiding groove 34 to a state in which an upper pin 32a of the holder 31 is positioned at an upper end of the guiding groove 34, and the combiner 30 can be thereby risen.

Also, in adjustment of the display angle of the combiner 30, as shown in Fig. 4 (b), if the direction V42 of the force that is applied to a first arm 42 is generated due to rotation of the direct current motor 45 again from the state (display position B) in which the upper pin 32a of the holder 31 is positioned at the upper end of the guiding groove 34, the upper pin 32a abuts against the upper end part of the guiding groove 34; and therefore, the direction V32b of the force that is applied to the lower pin 32b is guided so that the lower pin rotates about the upper pin 32a, by way of the angle adjustment part 34a formed in the shape of a fan, and the display angle of the combiner 30 can be moved from an angle indicated by the solid line to an angle indicated by the phantom line.

Next, shape requirements of the guiding groove 34 for adjusting the display angle of the combiner 30 of the head-up display device 1 in the embodiment will be described with reference to Fig. 6.

In order to adjust the display angle of the combiner 30 of the headup display 1 in the embodiment, as the guiding groove 34, as shown in Fig. 6, there may be provided a groove for adjustment of an angle in which the lower pin 32b is turnable on an arc of a circle C in which a center point P32a of the upper pin 32a is defined as a center O, and a distance between the upper pin 32 and the lower pin 32b (a distance between the center point P32a of the upper pin 32a and the center point P32b of the lower pin 32b) is defined as a radius r in a state in which the upper pin 32a has abutted against the upper end of the guiding groove 34.

If a specific shape of the groove for adjustment of an angle is indicated, for example, there is a groove formed in the shape of a fan like the angle adjustment part 34a as shown in Fig. 6.

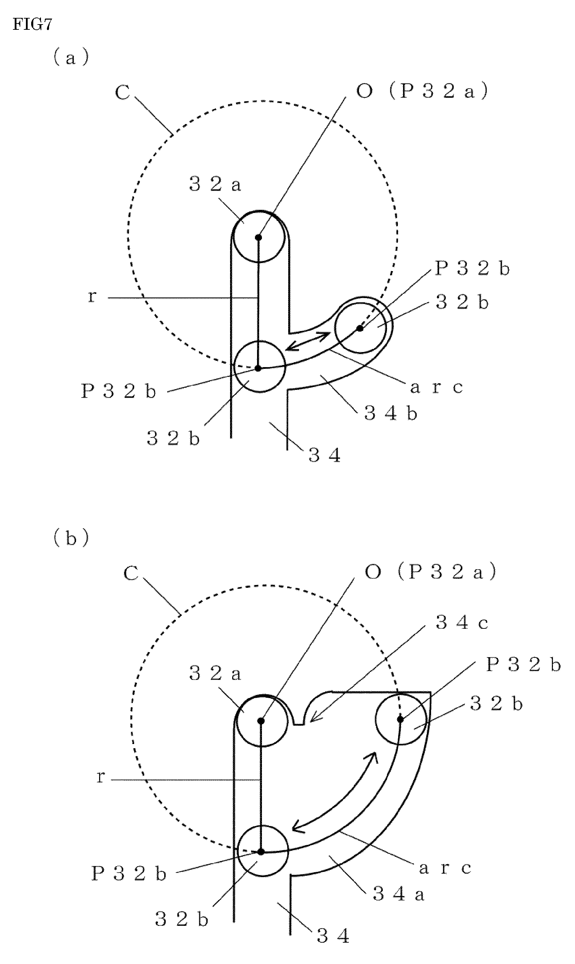

Also, as another modification example, it is considered that there is a groove shape diverging from the guiding groove 34 like a divergent groove part 34b as shown in Fig. 7 (a).

In addition, as shown in Fig. 7 (b), an engagingly locking part 34c may be provided so that the upper pin 32a is not guided to the groove part 34a formed in the shape of a fan, in providing the groove part 34a formed in the shape of the fan in which the lower pin 32b is made turnable about the upper pin 32a in the state in which the upper pin 32a has abutted against the upper part of the guiding groove 34.

Thus, a structure associated with elevation of the combiner 30 (storage/extension), opening or closing of the lid body 50 concurrently with such elevation, and adjustment of the display angle of the combiner 30 can be simplified and made compact by utilizing the operation of the two pins 32a, 32b of the holder 31 on which the combiner 30 that moves inside of the guiding groove 34 by way of the vertical drive mechanism 40 is supported.

In this manner, the property of assembling into the dashboard 2 of the head-up display device can be improved.

Also, the foregoing embodiment showed the configuration to provide the guiding groove 34a in which the lower pin (the other pin) 32b is made turnable about the upper pin (one pin) 32a in the state in which the upper pin (one pin) 32a has abutted against the upper end of the guiding groove 34; and however, without being limited thereto, a configuration to provide an angle adjustment part by which the upper pin (the other pin) 32a is made turnable about the lower pin (one pin) 32b in a state in which a lower pin (one pin) 32b has abutted against a lower end of the guiding groove 34 at the time of storage of the combiner 30 can also be employed in adjustment of an angle for the sake of storing the combiner 30 at the storage position B at an appropriate angle.

In addition, in place of the upper pin 32a, the lower pin 32b may be configured to come into contact with, and push up, the lower end of the opening or closing arm part 52a.

### INDUSTRIAL APPLICABILITY

The present invention is suitable as a combiner-type head-up display device to be mounted on a vehicle such as a motor vehicle or a motor bicycle, or alternatively, a transportation medium provided with an agricultural machine or a construction machine, a ship, or an aircraft.

### DESCRIPTION OF REFERENCE NUMERALS

- 1: Head-up display device
- 2: Dashboard
- 3: Opening portion
- 4: Front glass
- 10: Indicator
- 20: Planar mirror
- 30: Combiner
- 31: Holder
- 32a: Upper pin
- 32b: Lower pin
- 33: Supporting member
- 33a: Guide plate
- 33b: Supporting plate
- 34: Guiding groove
- 34a: Angle adjustment part
- 34b: Divergent groove part (angle adjustment part)
- 34c: Engagingly locking part
- 40: Vertical drive mechanism (vertical driving means)
- 41: Rotary shaft
- 42: First arm
- 42a: One end part of first arm
- 42b: The other end of first arm
- 43: Second arm
- 43a: One end part of second arm
- 43b: The other end part of second arm
- 44: Gear
- 45: Direct current motor
- 46: Worm
- 47: Stopper
- 50: Lid body
- 51: Covering part
- 52: Driven arm
- 52a: Opening or closing arm part
- 52b: Opening maintaining arm part
- 53: Tension coil spring (biasing means)
- A: Storage position
- B: Display position (extended position)

## Claims

1. A head-up display device comprising a combiner which directs and reflects, to a driver side, display light of information to be displayed, the display light being emitted from a display, the head-up display device causing visual recognition due to a virtual image to be achieved in a forward direction of a driver, the head-up display device comprising:
a holder on which the combiner is mounted, and which vertically moves from a storage position to a display position via an opening portion;
a pin which is provided on a side face of the holder;
a supporting member having a guiding groove in a vertical direction in which the pin is to be guided;
vertical driving means for vertically driving the holder; and
a lid body having a driven arm which turns while being pressed by the pin that vertically moves concurrently with vertical driving of the holder, the lid body opening or closing the opening portion.

2. The head-up display device according to claim 1, wherein
an angle adjustment part which adjusts an angle of the combiner at a display position is provided in a guiding groove of the supporting member.

3. The head-up display device according to claim 1 or claim 2, wherein biasing means for biasing the lid body in a closed direction is provided at the driven arm.

4. A head-up display device comprising a combiner which directs and reflects, to a driver side, display light of information to be displayed, the display light being emitted from a display, the head-up display device causing visual recognition due to a virtual image to be achieved in a forward direction of a driver, the head-up display device comprising:
a holder on which the combiner is mounted, and which vertically moves from a storage position to a display position via an opening portion;
vertical driving means for elevating the holder;
an upper pin and a lower pin which are respectively provided at upper and lower sides of a side face of the holder; and
a supporting member having a guiding groove which guides the upper pin and the lower pin,
wherein the guiding groove comprises an angle adjustment part in which, in a state in which either one of the upper pin and the lower pin has abutted against an end part of the guiding groove, another pin is turnable on an arc of a circle in which a distance between said one pin and said another pin is defined as a radius about said one pin, and
concurrently with elevation of the combiner by the vertical driving means, an angle of the combiner is made adjustable about said one pin by way of the angle adjustment part.

5. The head-up display device according to claim 4, having a driven arm which turns while being pressed by the upper pin that moves concurrently with elevation of the holder or by the lower pin,
wherein the driven arm comprises a lid body which opens or closes the opening portion.
